# EUROPEAN PATENT SPECIFICATION

(11) **EP 3 354 908 B1**
(45) Date of publication and mention of the grant of the patent: **04.11.2020**
(21) Application number: 18150192.5
(22) Date of filing: 03.01.2018
(51) Int. Cl.: G09F 15/02, F16B 5/06, G09F 17/00

(54) **KEDER RAIL CLAMP, KEDER LOCKING SYSTEM AND METHOD FOR USE OF KEDER RAIL CLAMP**
KEDERSCHIENENKLEMME, KEDERVERRIEGELUNGSSYSTEM UND VERFAHREN ZUR VERWENDUNG EINER KEDERSCHIENENKLEMME
PINCE DE RAIL KEDER, SYSTÈME DE VERROUILLAGE KEDER ET PROCÉDÉ D'UTILISATION D'UNE PINCE DE RAIL KEDER

(30) Priority: 27.01.2017 NO 20170134
(43) Date of publication of application: 01.08.2018
(73) Proprietor: Dyrnes, Ralph P., 0356 Oslo (NO); Ellingsen, Birgitte Hjelde, 0753 Oslo (NO)
(72) Inventor: DYRNES, Ralph P., 0356 Oslo (NO); ELLINGSEN, Birgitte Hjelde, 0753 Oslo (NO)
(74) Representative: Bryn Aarflot AS

(56) References cited:
- EP-A1- 0 547 314
- CH-A5- 583 857
- DE-A1- 4 326 471
- US-A- 4 194 312
- US-A- 4 231 141
- US-A- 5 586 400

## Description

### Technical field

The present invention relates to arrangements for retaining keder flaps with keders in place in keder tracks of a keder rail so that the keder does not move or that movement of the keder is restricted upon impact to the keder, keder rail, or keder flap.

### Background art

When mounting keders attached to a keder flap, which keder flap is in turn attached to a canvas such as an advertising banner, for example, it is a problem that the keder is able to move in the keder track. The movement may be due, for example, to wind acting on the canvas generating loads that may cause the keder to move in the keder track.

Canvases and tarpaulins are commonly stretched out between keder rails. The canvas will then typically be provided with at least one keder, commonly keders are provided on two opposite sides of the canvas. However, keders may also be provided on further sides of the canvas. At its sides provided with keders, the canvas is provided with keder flaps for keder attachment. The keders are adapted for being mounted in keder tracks of keder rails.

For the keder with the keder flap to be able to be inserted into a keder track, the keder track must be shaped so that the keder can easily be inserted into the track without the keder flap getting squeezed. Further, the longitudinal aperture of the keder track must allow the keder flap to be easily inserted into and removed from the keder track without being subject to wear caused by friction against the surfaces of the keder track. The cavity formed by the keder track with the keder mounted in the keder track enables the canvas/keder flap to move in the keder track.

In order to prevent movement of the keder flap in the keder track, use is made, for example, of screws mounted adjacent to the keder flap and in the keder rail so that the keder flap is pressed against one of the faces of the keder track in the longitudinal aperture of the keder track. The solution has some drawbacks. The surface of contact between the screw head and keder flap is small, which may potentially subject the keder flap to wear. Moreover, tools in the form of hole punching tools for creating a hole for the screw as well as driving tools for tightening the screw are needed.

Exemplary clamping devices for the attachment of flexible materials are found in the patent literature. For example, reference can be made to NL 1013816 C disclosing such a clamping device.

In DE 4326471 A1 it is disclosed a profile intended for fastening flexible web material. A longitudinal hollow profile is adapted to receive a keder rail with the web wound around and thereby attached to the keder. The longitudinal hollow profile is further adapted to be inserted into a longitudinal groove of a profile. The longitudinal hollow profile serves as a fixation adapter for the keder rail.

The European patent application EP 0 547 314 A1, discloses a fixing arrangement of an awning canvas fixed to a pipe body, the pipe body is arranged in an elongated tubular body with a longitudinal slit axially arranged on the wall of the elongated tubular body, so that the awning canvas can be pulled out of the longitudinal slit in the elongated tubular body. A locking device is adapted to be inserted into an end opening of the elongated tubular body to be in engagement with the pipe body with the awning so that axial movement of the body with the awning is prevented, while still making it possible to pull canvas out of the longitudinal slit.

It is an object of the present invention to provide an alternative solution to the use of screws for preventing the keder flap from moving.

### Summary of the invention

The present publication describes a keder rail clamp comprising:
a) a fixation lug adapted for engagement with a keder track,
b) a grip,
c) a springing element having a length A, the springing element forming a long side of the keder rail clamp located between the grip and the fixation lug, and
d) a clamping gap, the clamping gap extending from a free end of the fixation lug to a buckling edge of the grip, and
wherein the springing element during mounting to a keder rail is untensioned before being mounted to a keder rail, undergoes a tensioned phase during mounting, to end in a fully or partially untensioned configuration when mounting is completed.

The keder rail clamp may further comprise:
e) a holding edge adjacent to the grip,
f) a first short side having a length B and a width X adjacent to the holding edge,
g) a long side having a length A and a width H adjacent to the first short side, and
h) a second short side having a length D and a width X adjacent to the long side and the fixation lug.

The width X of the keder rail clamp need not be the constant across the entire keder rail clamp, but rather X denotes any width of the clamps. For example, the clamp may have a smaller width in a section of the long side, i.e. the springing element, so that the spring constant of the springing element can be reduced. It is to be understood that the width X may be one of several parameters affecting the spring constant of the springing element, that is, the long side.

The fixation lug may form an angle of between 0 and -45° to the first short side. Further, the fixation lug may protrude from the first short side by a depth d. The width X may be the same for all sides of the keder rail clamp. According to another aspect of the invention, the width X may vary.

According to the present invention it is provided a keder locking system comprising:
a) a keder rail clamp,
b) a keder rail having at least a keder track,
c) a keder flap having a keder configured for being inserted into the keder track, wherein
the keder rail clamp is characterised in that the cross-section of the keder rail clamp has a perimeter that is substantially congruent to the cross-section of the keder rail, and that the keder rail clamp includes a fixation lug adapted for engagement with the keder track.

According to an aspect of the keder locking system, the keder may be arranged in the keder track.

According to still another aspect of the keder locking system, the keder rail clamp may further comprise:
d) a grip,
e) a springing element having a length A, the springing element forming a long side of the keder rail clamp located between the grip and the fixation lug, and
f) a clamping gap, the clamping gap extending from a free end of the fixation lug to a buckling edge of the grip.

According to a further aspect of the keder locking system, the keder rail clamp may further comprise:
g) a holding edge adjacent to the grip,
h) a first short side having a length B and a width X adjacent to the holding edge,
i) a long side having a length A and a width H adjacent to the first short side, and
j) a second short side having a length D and a width X adjacent to the long side and the fixation lug.

In an aspect of the keder locking system, the long side may be the springing element.

In a further aspect of the keder locking system the fixation lug may form an angle of between 0 and -45° to the first short side and the fixation lug may protrude from the first short side by a depth d.

In a further aspect of the keder locking system, the width X may be the same for all sides of the keder rail clamp. In still another aspect, the width X may vary.

Also provided is a method of clamping a keder attached to a keder flap into a keder track, comprising the steps of:
a) providing a keder rail clamp, the keder rail clamp being characterised in that the cross-section of the keder rail clamp has a perimeter that is substantially congruent to the cross-section of the keder rail, and that the keder rail clamp includes a fixation lug adapted for engagement with the keder track,
b) positioning the fixation lug in the keder track,
c) clamping the keder rail clamp at its end opposite to the end having the fixation lug against the side edge of the keder rail opposite to the side having the keder track, so that a grip abuts against the keder rail,
d) applying additional force in the same direction as in step c) so that a buckling edge of the keder rail clamp is moved over an edge of the keder rail, and so that the keder rail clamp snaps in place completely or partially surrounding the keder rail.

Other features and advantages will be apparent from the appended patent claims.

### Brief description of the drawings

In the following, a brief description of the drawings is provided in order to facilitate the understanding of the present invention. The following discussion will refer to the accompanying drawings, in which:
Fig. 1 shows a cross-section of an embodiment of a keder rail clamp,
Fig. 2a shows a keder rail clamp mounted to a keder rail,
Fig. 2b shows another exemplary keder rail clamp mounted to a keder rail,
Fig. 3a shows a keder rail clamp mounted to a keder rail, as seen from above,
Fig. 3b shows another exemplary keder rail clamp mounted to a keder rail, as seen from above,
Fig. 4a shows still another exemplary keder rail clamp mounted to a keder rail, as seen from above,
Fig. 4b shows still another exemplary keder rail clamp mounted to a keder rail, as seen from above,
Fig. 5a shows a cross-section of an embodiment of a keder rail clamp,

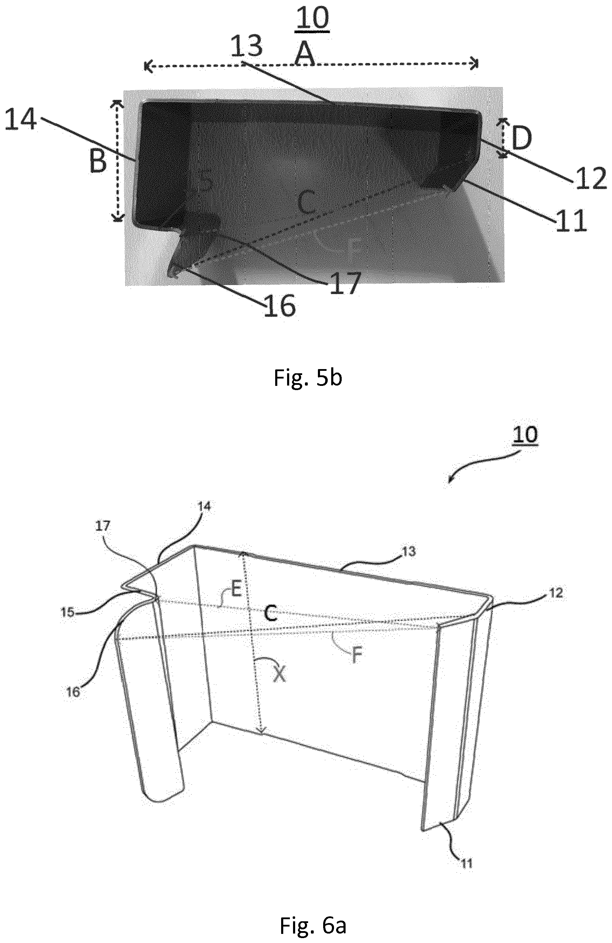

Fig. 5b shows a cross-section of an embodiment of a keder rail clamp,
Fig. 6a shows a cross-section of an embodiment of a keder rail clamp,
Fig. 6b shows a cross-section of an embodiment of a keder rail clamp,
Fig. 7a shows a keder rail clamp mounted to a keder rail, as seen from below,
Fig. 7b shows another exemplary keder rail clamp mounted to a keder rail, as seen from below,
Fig. 8a shows a cross-section of an embodiment of a keder rail clamp,

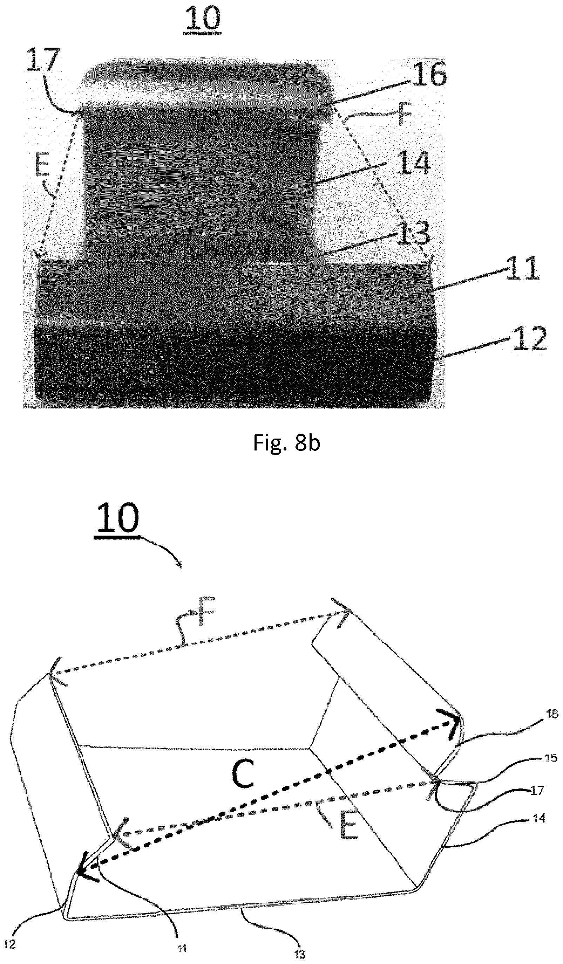

Fig. 8b shows a cross-section of an embodiment of a keder rail clamp,
Fig. 9a shows a cross-section of an embodiment of a keder rail clamp,
Fig 9b shows a cross-section of an embodiment of a keder rail clamp,
Fig. 10 shows a keder rail clamp partially slid onto a keder rail,
Fig. 11 shows a keder rail clamp in a first mounting step of its fixation to a keder rail,
Fig. 12 shows a keder rail clamp in a second mounting step of its fixation to a keder rail, in which a buckling edge of the keder rail clamp abuts against a corner edge of a keder rail,
Fig. 13 shows another exemplary keder rail clamp and keder rail,
Fig. 14 shows exemplary keder rails, and

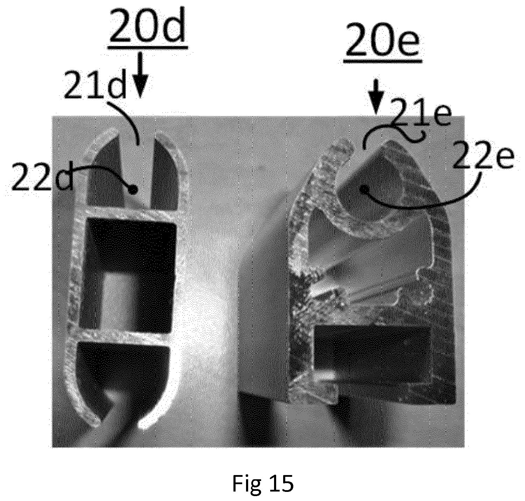

Fig. 15 shows exemplary keder rails.

### Detailed description of the invention

In the following, first a general embodiment of the present invention is disclosed, after which specific embodiments are disclosed with reference to the drawings.

When keder fabric is installed in keder rails it is a problem that the keder moves in the keder track, both in the longitudinal direction of the keder track and transversely to the longitudinal direction. A clamp having a fixation lug adapted for squeezing the keder flap and keder against the keder track of a keder rail solves this problem. The fixation lug is shaped as a lip configured to extend in the longitudinal direction of the keder track in such a manner that no damage is caused to the keder flap while at the same time the keder is prevented from moving in the longitudinal direction of the keder track or transversely thereto, or at the very least said movement is substantially restricted.

A clamp comprising the fixation lug is described in this document. The clamp is characterised in that the clamp, as seen in cross-section, has a perimeter adapted to the cross-section of the keder rail, so that the fixation lug locks the keder and keder lug in that the fixation lug is retained in place by the clamp.

### An embodiment of a clamp

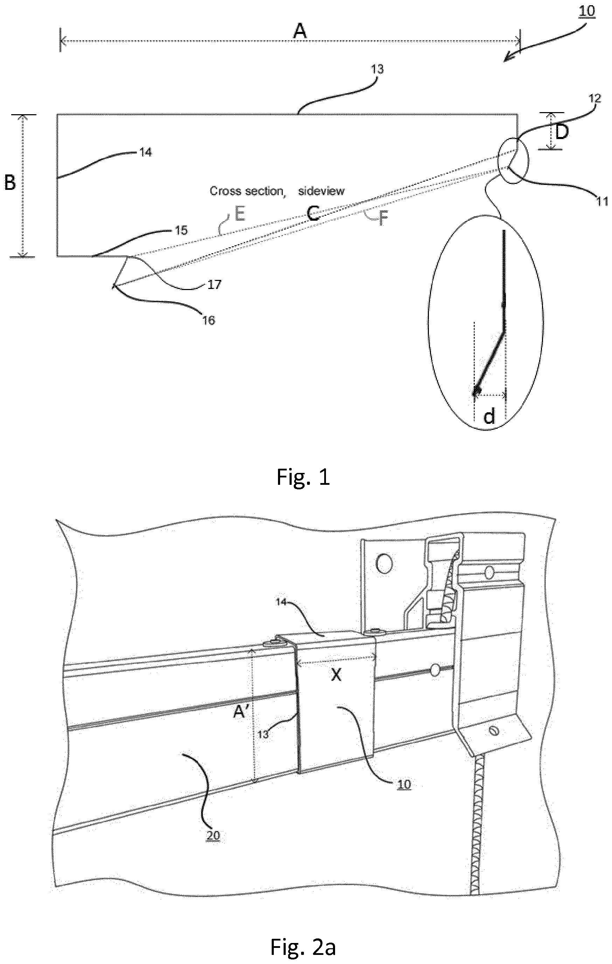

Fig. 1 is a cross-sectional view of a clamp 10, the clamp being characterised by a first short side 14 connected to a long side 13 at an angle of approximately 90°. As mentioned above, the shape of the first short side and an optional transition to the long side is dictated by the shape of the keder rail. For example, when an elliptical or circular keder rail is used the clamp will be shaped differently.

Fig. 1 further shows that the long side 13 is connected to second short side 12. In the present example, the angle between the long side and the second short side is approximately 90°. The second short side has a length D, with the length D corresponding approximately to a length D'. D' extends from a longitudinal side edge of keder rail 20 to keder track 21. At its end opposite to long side 13 a keder lug 11 is provided. Keder lug 11 is adapted for entering into keder track 21.

First short side 14, at its edge opposite to the edge towards long side 13, is connected to a holding edge 15 so that an angle of approximately 90° is formed. The holding edge, at the other end thereof, is provided with a double-acting grip 16. As seen in cross-section, double-acting grip 16, holding edge 15, first short side 14, long side 13, second short side 12, and keder lug 11 appear as a solid line adapted to the shape of a keder rail 20.

### Keder guide

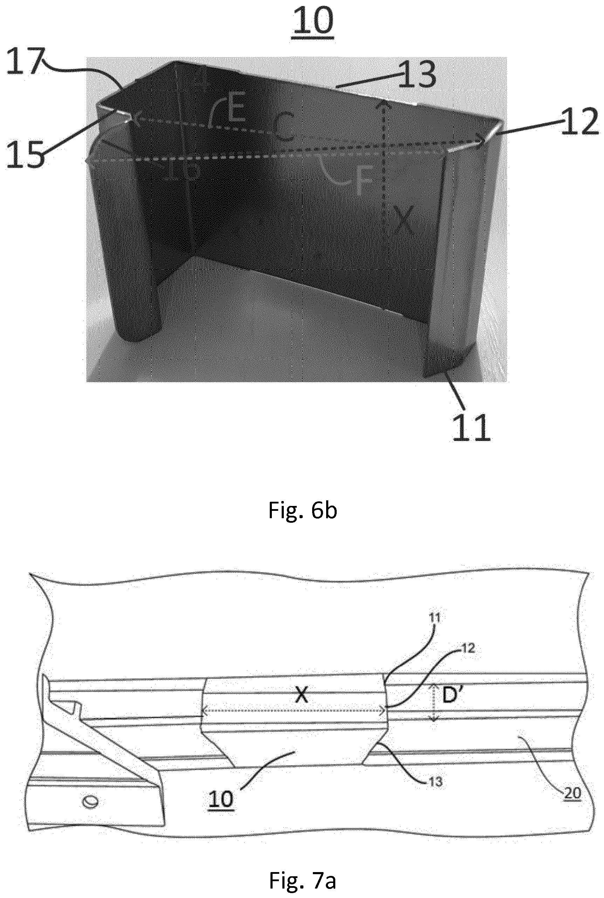

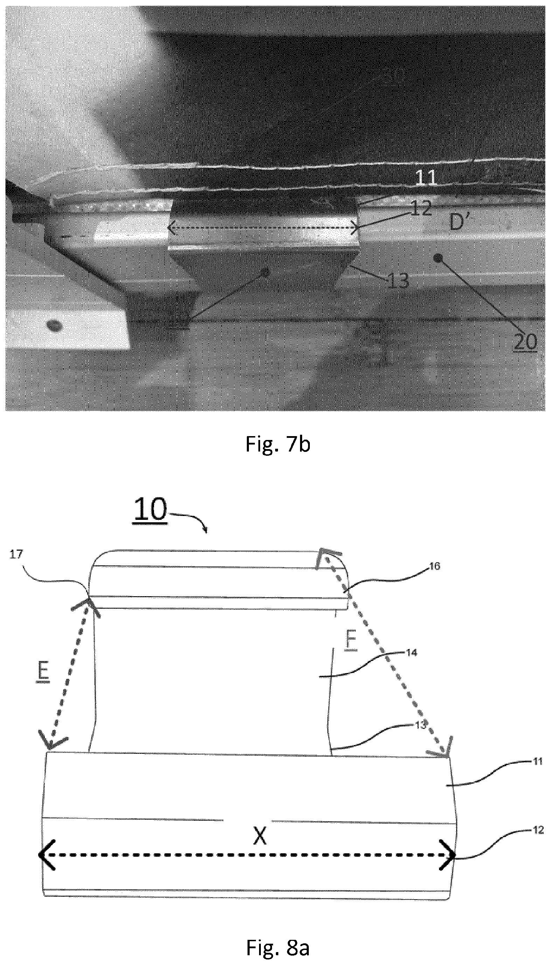

As mentioned, clamp 10 is shaped so as to be engaged with a keder 31 attached to a keder flap 30 when clamp 10 is clamped to a keder rail 20, as seen in Figs. 7a and 7b. A closer examination of Figs. 7a and 7b shows that fixation lug 11 protrudes downwardly into a keder track 21 of keder rail 20. Fixation lug 11 is supposed to squeeze keder flap 30 against the mouth of keder track 21, so that keder flap 30 is prevented from moving or that movement of keder flap 30 is impeded. Fixation lug 11 may also press keder 31 against the bottom of keder track 21.

Keder track 21 extends in the longitudinal direction of keder rail 20. Typically, keder rail 20 is an extruded aluminium profile, but it could also be made of a different material and therefore also does not need to be extruded; what is essential is that keder rail 20 includes a keder track 21 for receiving a keder 31.

### Mounting clamps to the keder rail

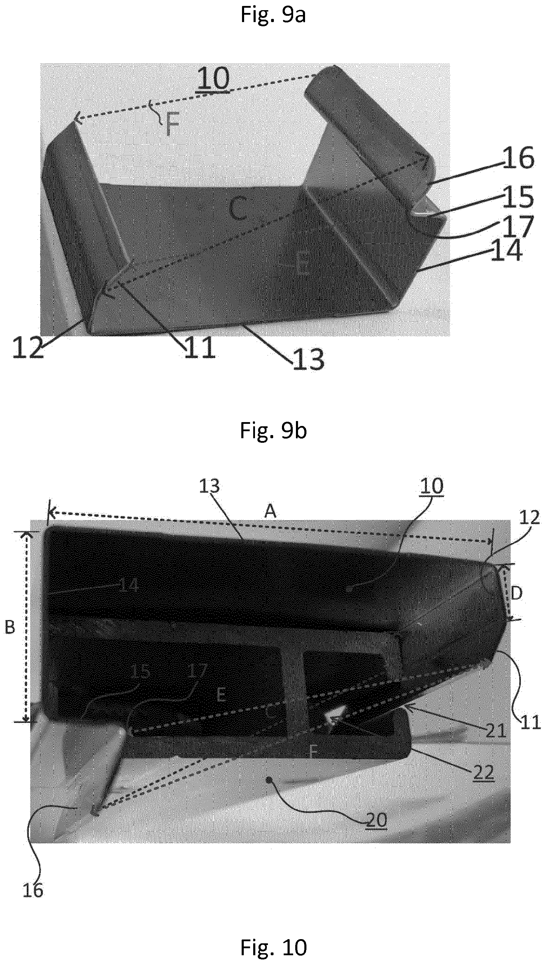

Figs. 10 - 12 illustrate a clamp 10 that has been clamped and partially clamped to a keder rail 20, respectively. In Fig. 10, clamp 10 is shown clamped to keder rail 20. In order to illustrate the engagement between clamp 10 and keder rail 20, the clamp is shown in a position in which it is pulled slightly away from keder rail 20 in the longitudinal direction thereof. From the figure it is seen that long side 13 has a length A, which is equal to or slightly greater than the height A' of keder rail 20. Also seen is that the first short side 14 of the clamp has a length B; the keder rail has a corresponding thickness B', with B' = B or B being somewhat greater than B'. Keder rail 20 is shown to include a keder track 21. The distance from the long side of keder rail 20 to keder track 21 is denoted D'. D' is equal to or somewhat shorter than the second short side 12 of clamp 10. Fig. 10 shows that fixation lug 11 extends downwards into keder track 21. The figure also shows the grip 16, which simplifies the clamping of clamp 10 to keder rail 20. The clamp 10 is shown to have a clamping gap of length C. The clamping gap extends from double-acting grip 16 to the buckling point between fixation lug 11 and second short side 12.

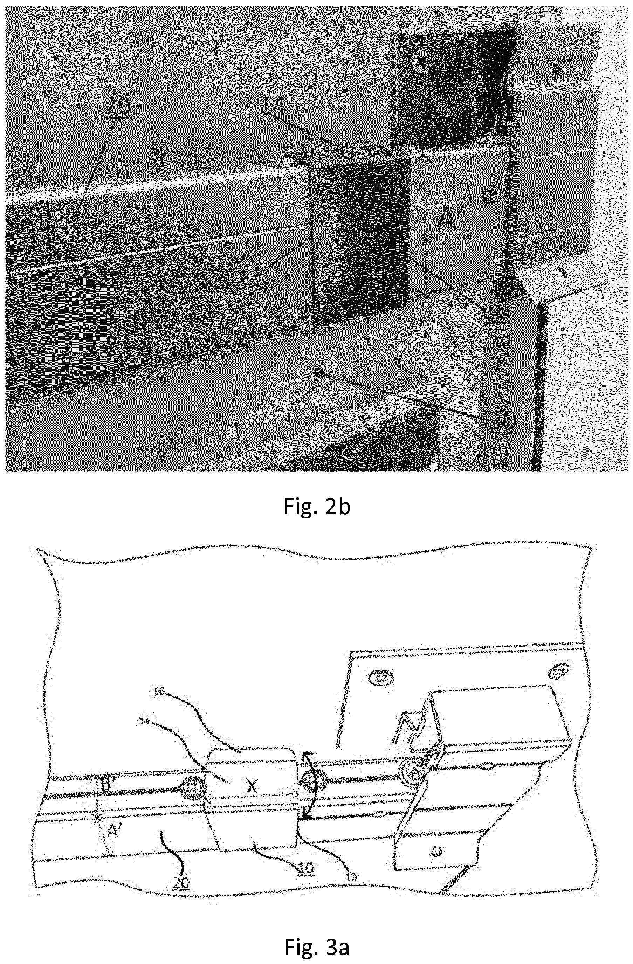

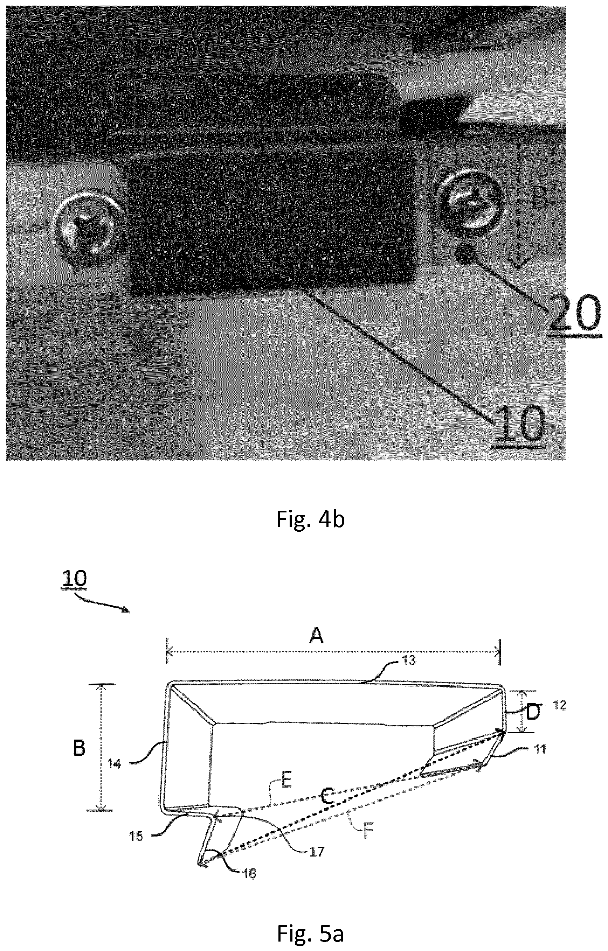

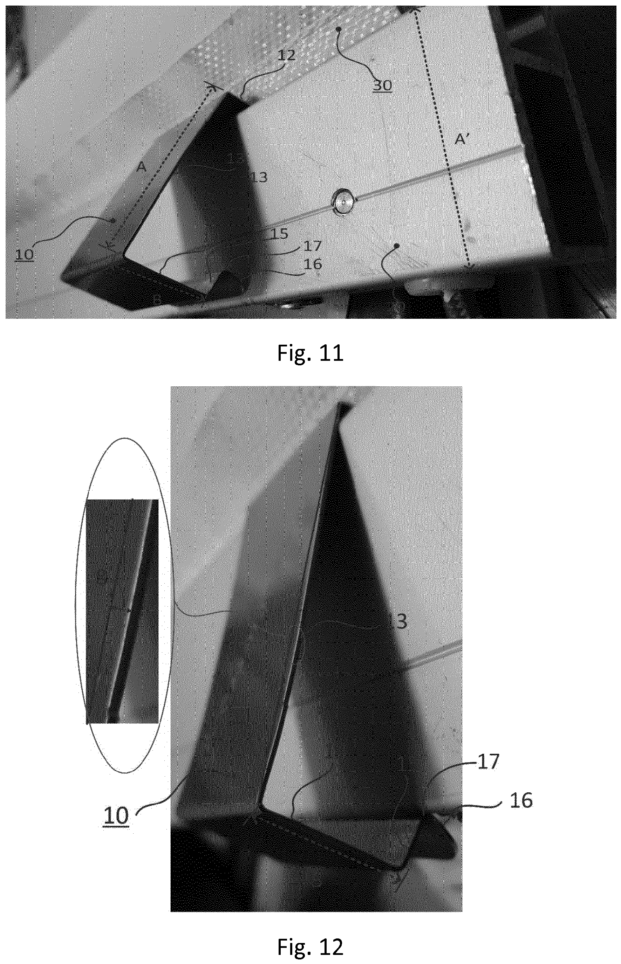

Fig. 11 shows the clamp in a position before being clamped to keder rail 20. It can be seen that second short side 12 of clamp 10 is positioned against keder flap 30. In the figure it is indicated that fixation lug 11 extends downwardly between keder flap 30 and keder track 21 of keder rail 20. Grip 16 of clamp 10 is shown abutting against keder rail 20 at the downward edge thereof. It is seen that there is a small distance between the outer edge of grip 16 and the lower edge of the keder rail, at which the lower side of keder rail 20 has a thickness B'. This distance necessitates the exertion of a tension force on the grip of the clamp in order to fix the clamp 10 to keder rail 20. Looking more closely at Fig. 12 it is seen that grip 16 is tensioned and pulled only just onto the lower edge of keder rail 20. It is seen from the figure that a tension force is acting at the points of contact between clamp 10 and keder rail 20. The long side 13 of clamp 10 is slightly curved as a result of the tensioning of the clamp. Grip 16 has several functions; not only does it allow for manual engagement of clamp 10, but the outer edge of grip 16 is also shaped so as to abut against keder rail 20 before the clamp is tensioned, in which position the grip is not a grip but a guide allowing the clamp 10, at the first side 14 thereof, to be pushed in against keder rail 20. Grip 16, when pushed against keder rail 20, will move down keder rail 20 towards the lower edge of keder rail 20 while at the same time clamp 10 will be tensioned and a spring effect is achieved. If the grip is pushed further inwards, then the part of grip 16 forming the buckling point of the first short side 14 will abut against the lower corner of keder rail 20. If additional force is exerted on clamp 10 against keder rail 20, the clamp will slide into a clamped position as shown in Figs. 2a, 2b, 3a, 3b, 4a, 4b, 7a, and 7b.

For a canvas with keder flaps to be properly secured a plurality of clamps 10 can be used. For example, two clamps 10 mounted to a keder rail 20 at the upper edge of a canvas and two clamps 10 mounted to a second keder rail at the lower edge of a canvas can be envisioned.

The clamps 10 at the upper edge will have their fixation lugs 11 facing downwardly and their grips 16 adjacent to the top side of the upper keder rail 20. The opposite will be the case for the clamps mounted to a lower keder rail 20.

The clamp solution scales well to canvases of different sizes, as several clamps 10 may be used for each keder rail 20.

Dismounting the clamp from the keder rail.

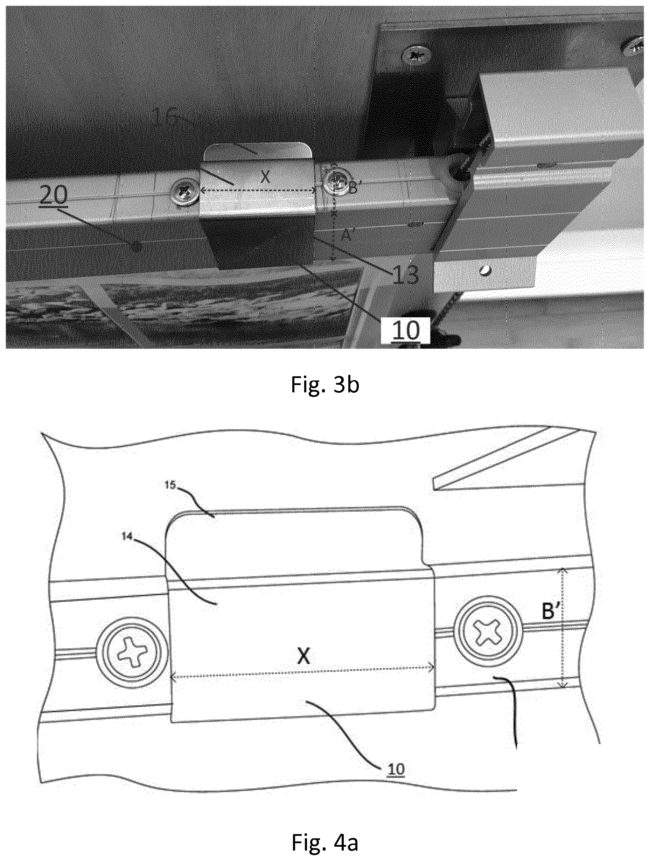

The clamp 10 is dismounted from keder rail 20 by first pulling grip 16 in a direction opposite to the direction of keder flap 30 and then away from keder rail 20. In this regard, particular reference is made to Fig. 3a.

### Alternative embodiments

Clamp 10 is shown for engagement with a keder rail 20 of rectangular cross-section. However, the keder rail may be of different cross-section. For example, it may be substantially elliptical, that is, include two side edges in the form of arc segments connected at one end thereof to a straight side and interconnected at the opposite ends via a keder track.

In case the clamp is to be used with keder rails of a non-rectangular cross-section such as a substantially elliptical cross-section, then the long side of the clamp advantageously will be curved so as to accommodate a curved surface. The double-acting grip may still serve its purpose and a clamping effect may be achieved in that the clamping gap is adapted to the distance between the upper and lower edges of the keder rail.

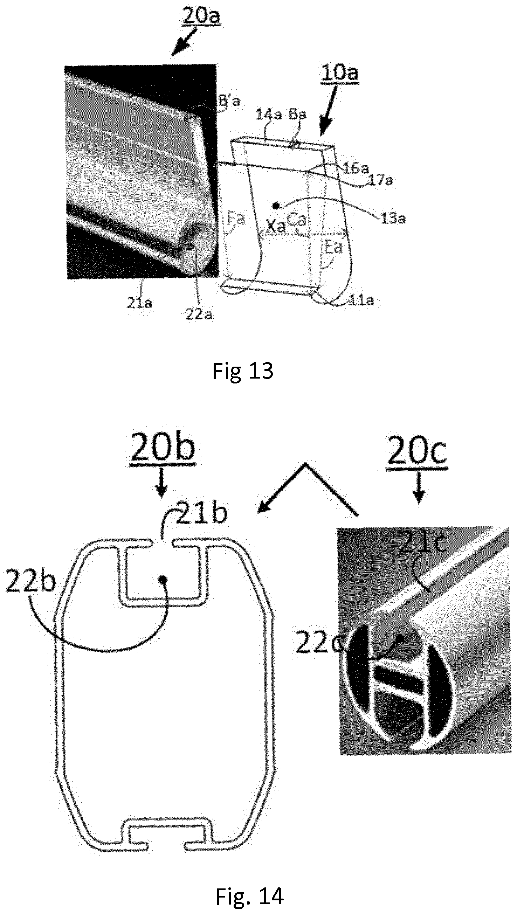

Substantially circular keder rails also exist having an embedded keder track. A clamp may also be adapted to such a shape, as may the clamping effect of the clamp. Figs. 13 and 14 show various exemplary keder rail cross-sections. In Fig. 13 a possible configuration of a clamp for a first alternative keder rail is indicated.

| | |
|---|---|
| 10 | Clamp, keder rail clamp |
| 10a | Second variant clamp, second variant keder rail clamp |
| 11 | Fixation lug |
| 11a | Fixation lug of second variant clamp |
| 12 | Second short side |
| 13 | Long side (springing element) |
| 14 | First short side |
| 14a | First short side of second variant clamp |
| 15 | Holding edge |
| 16 | Grip |
| 16a | Grip of second variant clamp |
| 17 | Buckling edge |
| 17a | Buckling edge of second variant clamp |
| 20 | Keder rail |
| 20a | Second variant keder rail |
| 20b | Third variant keder rail |
| 20c | Fourth variant keder rail |
| 21 | Keder track |
| 21a | Keder track of second variant keder rail |
| 21b | Keder track of third variant keder rail |
| 21c | Keder track of fourth variant keder rail |
| 22 | Keder guide |
| 22a | Keder guide of second variant keder rail |
| 22b | Keder guide of third variant keder rail |
| 22c | Keder guide of fourth variant keder rail |
| 30 | Keder flap |
| 31 | Keder |
| A | Length of long side |
| A' | Height of keder rail |
| B | Length of first short side 14 |
| Ba | Length of first short side of second variant clamp 14a |
| B' | Thickness of keder rail |
| B'a | Thickness of second variant keder rail |
| C | Clamping gap |
| Ca | Clamping gap of second variant clamp |
| D | Length of second short side 12 |
| D' | Length from adjacent edge of keder rail to groove/slit of keder rail for keder guidance. |
| d | Protrusion depth of fixation lug |
| E | Second contact opening, i.e. distance between the apex of grip/holding edge and the outer edge of fixation lug, |
| Ea | Second contact opening, i.e. distance between the apex of the grip/holding edge of the second variant clamp and the outer edge of fixation lug, |
| F | First contact opening, i.e. distance between the outer edge of the grip and the outer edge of fixation lug |
| Fa | First contact opening, i.e. distance between the outer edge of the grip of the second variant clamp and the outer edge of the fixation lug |
| g | Springing path |
| X | Width of keder rail clamp (10) |
| Xa | Width of second variant keder rail clamp |

## Claims

1. A keder locking system comprising:
a) a keder rail clamp (10, 10a),
b) a keder rail (20, 20a, 20b, 20c) having at least a keder track (21, 21a, 21b, 21c),
c) a keder flap (30) having a keder (31) configured for being inserted into the keder track (21, 21a, 21b, 21c), where
the keder rail clamp (10, 10a) is specified in that the cross-section of the keder rail clamp (10, 10a) has a perimeter that is substantially congruent to the cross-section of the keder rail (20, 20a, 20b, 20c), and that the keder rail clamp (10, 10a) includes a fixation lug (11, 11a) adapted for engagement with the keder track (21, 21a, 21b, 21c).

2. The keder locking system of claim 1,
wherein the keder (31) is arranged in the keder track (21, 21a, 21b, 21c).

3. The keder locking system of claims 1 or 2,
wherein the keder rail clamp (10, 10a) further comprises:
d) a grip (16, 16a),
e) a springing element (13) having a length A, the springing element forming a long side of the keder rail clamp (10, 10a) located between the grip (16, 16a) and the fixation lug (11, 11a), and
f) a clamping gap (C, Ca), the clamping gap (C, Ca) extending from a free end of the fixation lug (11, 11a) to a buckling edge (17, 17a) of the grip (16, 16a).

4. The keder locking system of claim 3,
wherein the keder rail clamp (10, 10a) further comprises:
g) a holding edge (15) adjacent to the grip (16),
h) a first short side (14) having a length B and a width X adjacent to the holding edge (15),
i) a long side (13) having a length A and a width H adjacent to the first short side (14), and
j) a second short side (12) having a length D and a width X adjacent to the long side (13) and the fixation lug (11).

5. The keder locking system (10, 10a) of claims 3 or 4,
wherein the long side (13) is the springing element.

6. The keder locking system (10, 10a) of any combination of claims 1 - 5,
wherein the fixation lug (11) forms an angle of between 0 and -45° to the first short side (12).

7. The keder locking system (10, 10a) of claim 6,
wherein the fixation lug (11) protrudes from the first short side (12) by a depth d.

8. The keder locking system (10, 10a) of any combination of claims 4 - 7,
wherein the width X is the same for all sides of the keder rail clamp (10, 10a).

9. The keder locking system (10, 10a) of any combination of claims 4 - 7,
wherein the width X may vary.

10. A method of clamping a keder (31) attached to a keder flap (30) into a keder track (21, 21a, 21b, 21c), comprising the steps of:
a) providing a keder rail clamp (10, 10a), the keder rail clamp being specified in that the cross-section of the keder rail clamp (10, 10a) has a perimeter that is substantially congruent to the cross-section of the keder rail (20, 20a, 20b, 20c), and that the keder rail clamp (10, 10a) includes a fixation lug (11, 11a) adapted for engagement with the keder track (21, 21a, 21b, 21c),
b) positioning the fixation lug (11, 11a) in the keder track (21, 21a, 21b, 21c),
c) clamping the keder rail clamp (10, 10a) at its end opposite to the end having the fixation lug (11, 11a) against the side edge of the keder rail (20, 20a, 20b, 20c) opposite to the side having the keder track (21, 21a, 21b, 21c), so that a grip (16, 16a) abuts against the keder rail (20, 20a, 20b, 20c),
d) applying additional force in same direction as in step c) so that a buckling edge (17, 17a) of the keder rail clamp (10, 10a) slides over an edge of the keder rail (20, 20a, 20b, 20c), and so that the keder rail clamp snaps in place completely or partially surrounding the keder rail (20, 20a, 20b, 20c).

## Patentansprüche

1. Keder-Verriegelungssystem, umfassend:
a) eine Kederschienen-Klemme (10, 10a),
b) eine Kederschiene (20, 20a, 20b, 20c) mit mindestens einer Kederführung (21, 21a, 21b, 21c),
c) eine Kederklappe (30) mit einem Keder (31), der zum Einführen in die Kederführung (21, 21a, 21b, 21c) konfiguriert ist, wobei
die Kederschienen-Klemme (10, 10a) dadurch spezifiziert ist, dass der Querschnitt der Kederschienen-Klemme (10, 10a) einen Umfang hat, der im Wesentlichen kongruent zum Querschnitt der Kederschiene (20, 20a, 20b, 20c) ist, und dass die Kederschienen-Klemme (10, 10a) eine Befestigungslasche (11, 11a) aufweist, die zum Eingriff mit der Kederführung (21, 21a, 21b, 21c) geeignet ist.

2. Keder-Verriegelungssystem nach Anspruch 1, wobei der Keder (31) in der Kederführung (21, 21a, 21b, 21c) angeordnet ist.

3. Keder-Verriegelungssystem nach Anspruch 1 oder 2, wobei die Kederschienen-Klemme (10, 10a) ferner Folgendes umfasst:
d) einen Griff (16, 16a),
e) ein Federelement (13) mit einer Länge A, wobei das Federelement eine lange Seite der Kederschienen-Klemme (10, 10a) bildet, die sich zwischen dem Griff (16, 16a) und der Befestigungslasche (11, 11a) befindet, und
f) einen Klemmspalt (C, Ca), wobei sich der Klemmspalt (C, Ca) von einem freien Ende der Befestigungslasche (11, 11a) bis zu einer Knickkante (17, 17a) des Griffs (16, 16a) erstreckt.

4. Keder-Verriegelungssystem nach Anspruch 3, wobei die Kederschienen-Klemme (10, 10a) ferner Folgendes umfasst:
g) eine Haltekante (15), die an den Griff (16) angrenzt,
h) eine erste kurze Seite (14) mit einer Länge B und einer Breite X, die an die Haltekante (15) angrenzt,
i) eine lange Seite (13) mit einer Länge A und einer Breite H, die an die erste kurze Seite (14) angrenzt, und
j) eine zweite kurze Seite (12) mit einer Länge D und einer Breite X, die an die lange Seite (13) und die Befestigungslasche (11) angrenzt.

5. Keder-Verriegelungssystem (10, 10a) nach Anspruch 3 oder 4, wobei die lange Seite (13) das Federelement ist.

6. Keder-Verriegelungssystem (10, 10a) einer beliebigen Kombination nach den Ansprüchen 1 bis 5, wobei die Befestigungslasche (11) mit der ersten kurzen Seite (12) einen Winkel zwischen 0 und -45° bildet.

7. Keder-Verriegelungssystem (10, 10a) nach Anspruch 6, wobei die Befestigungslasche (11) von der ersten kurzen Seite (12) um eine Tiefe d vorsteht.

8. Keder-Verriegelungssystem (10, 10a) einer beliebigen Kombination nach den Ansprüchen 4 bis 7, wobei die Breite X für alle Seiten der Kederschienen-Klemme (10, 10a) gleich ist.

9. Keder-Verriegelungssystem (10, 10a) einer beliebigen Kombination nach den Ansprüchen 4 bis 7, wobei die Breite X variieren kann.

10. Verfahren zum Einklemmen eines Keders (31), der an einer Kederklappe (30) befestigt ist, in eine Kederführung (21, 21a, 21b, 21c), umfassend die folgenden Schritte:
a) Bereitstellen einer Kederschienen-Klemme (10, 10a), wobei die Kederschienen-Klemme dadurch spezifiziert ist, dass der Querschnitt der Kederschienen-Klemme (10, 10a) einen Umfang aufweist, der im Wesentlichen kongruent zu dem Querschnitt der Kederschiene (20, 20a, 20b, 20c) ist, und dass die Kederschienen-Klemme (10, 10a) eine Befestigungslasche (11, 11a) umfasst, die zum Eingriff mit der Kederführung (21, 21a, 21b, 21c) geeignet ist,
b) Positionieren der Befestigungslasche (11, 11a) in der Kederführung (21, 21-a, 21-b, 21c),
c) Festklemmen der Kederschienen-Klemme (10, 10a) an ihrem Ende, das dem Ende mit der Befestigungslasche (11, 11a) gegenüberliegt, gegen die Seitenkante der Kederschiene (20, 20a, 20b, 20c), die der Seite mit der Kederführung (21, 21a, 21b, 21c) gegenüberliegt, so dass ein Griff (16, 16a) an der Kederschiene (20, 20a, 20b, 20c) anliegt,
d) Ausüben einer zusätzlichen Kraft in derselben Richtung wie in Schritt c), so dass eine Knickkante (17, 17a) der Kederschienen-Klemme (10, 10a) über eine Kante der Kederschiene (20, 20a, 20b, 20c) gleitet, und so dass die Kederschienen-Klemme ganz oder teilweise um die Kederschiene (20, 20a, 20b, 20c) herum einrastet.

## Revendications

1. Système de verrouillage à passepoil comprenant :
a) une pince à rail de passepoil (10, 10a),
b) un rail de passepoil (20, 20a, 20b, 20c) présentant au moins une voie de passepoil (21, 21a, 21b, 21c),
c) un rabat à passepoil (30) présentant un passepoil (31) conçu pour être inséré dans la voie de passepoil (21, 21a, 21b, 21c),
la pince à rail de passepoil (10, 10a) étant **caractérisée en ce que** sa section transversale a un périmètre qui est sensiblement congruent à celui de la section transversale du rail de passepoil (20, 20a, 20b, 20c), et **en ce que** la pince à rail de passepoil (10, 10a) comprend une patte de fixation (11, 11a) conçue pour entrer en prise avec la voie de passepoil (21, 21a, 21b, 21c).

2. Système de verrouillage à passepoil selon la revendication 1, dans lequel le passepoil (31) est disposé dans la voie de passepoil (21, 21a, 21b, 21c).

3. Système de verrouillage à passepoil selon la revendication 1 ou 2, dans lequel la pince à rail de passepoil (10, 10a) comprend en outre :
d) une poignée (16, 16a),
e) un élément élastique (13) ayant une longueur A, l'élément élastique formant un côté long de la pince à rail de passepoil (10, 10a) situé entre la poignée (16, 16a) et la patte de fixation (11, 11a), et
f) un espace de serrage (C, Ca), l'espace de serrage (C, Ca) s'étendant d'une extrémité libre de la patte de fixation (11, 11a) à un bord de blocage (17, 17a) de la poignée (16, 16a).

4. Système de verrouillage à passepoil selon la revendication 3, dans lequel la pince à rail de passepoil (10, 10a) comprend en outre :
g) un bord de maintien (15) adjacent à la poignée (16),
h) un premier côté court (14) ayant une longueur B et une largeur X à proximité du bord de maintien (15),
i) un côté long (13) ayant une longueur A et une largeur H à proximité du premier côté court (14), et
j) un second côté court (12) ayant une longueur D et une largeur X à proximité du côté long (13) et de la patte de fixation (11).

5. Système de verrouillage à passepoil (10, 10a) selon les revendications 3 ou 4, dans lequel le côté long (13) est l'élément élastique.

6. Système de verrouillage à passepoil (10, 10a) selon toute combinaison des revendications 1 à 5, dans lequel la patte de fixation (11) forme un angle entre 0 et -45° par rapport au premier côté court (12).

7. Système de verrouillage à passepoil (10, 10a) selon la revendication 6, dans lequel la patte de fixation (11) fait saillie du premier côté court (12) d'une profondeur d.

8. Système de verrouillage à passepoil (10, 10a) selon toute combinaison des revendications 4 à 7, dans lequel la largeur X est la même pour tous les côtés de la pince à rail de passepoil (10, 10a).

9. Système de verrouillage à passepoil (10, 10a) selon toute combinaison des revendications 4 à 7, dans lequel la largeur X peut varier.

10. Procédé de serrage d'un passepoil (31) attaché à un rabat à passepoil (30) dans une voie de passepoil (21, 21a, 21b, 21c), le procédé comprenant les étapes consistant à :
a) fournir une pince à rail de passepoil (10, 10a), la pince à rail de passepoil étant **caractérisée en ce que** sa section transversale a un périmètre qui est sensiblement congruent à celui de la section transversale du rail de passepoil (20, 20a, 20b, 20c), et **en ce que** la pince à rail de passepoil (10, 10a) comprend une patte de fixation (11, 11a) conçue pour entrer en prise avec la voie de passepoil (21, 21a, 21b, 21c),
b) positionner la patte de fixation (11, 11a) dans la voie de passepoil (21, 21a, 21b, 21c),
c) serrer la pince à rail de passepoil (10, 10a) se trouvant au niveau de son extrémité opposée à l'extrémité présentant la patte de fixation (11, 11a) contre le bord latéral du rail de passepoil (20, 20a, 20b, 20c) opposé au côté présentant la voie de passepoil (21, 21a, 21b, 21c), de sorte qu'une poignée (16, 16a) vient en butée contre le rail de passepoil (20, 20a, 20b, 20c),
d) appliquer une force supplémentaire dans la même direction qu'à l'étape c) de sorte qu'un bord de blocage (17, 17a) de la pince à rail de passepoil (10, 10a) glisse sur un bord du rail de passepoil (20, 20a, 20b, 20c), et de sorte que la pince à rail de passepoil s'enclenche en place complètement ou partiellement, entourant le rail de passepoil (20, 20a, 20b, 20c).
